# EUROPEAN PATENT SPECIFICATION

(11) **EP 1 131 199 B1**
(45) Date of publication and mention of the grant of the patent: **11.12.2002**
(21) Application number: 99954328.3
(22) Date of filing: 11.10.1999
(51) Int. Cl.: B29C 69/00

(54) **MOLD AND METHOD FOR PRODUCING ATOMIZERS**
FORM UND VERFAHREN ZUR HERSTELLUNG VON ZERSTÄUBERN
MOULE ET PROCEDE DE PRODUCTION DE PULVERISATEURS

(30) Priority: 13.10.1998 IT MI982199
(43) Date of publication of application: 12.09.2001
(73) Proprietor: Somova S.R.L., 20090 Buccinasco (IT)
(72) Inventor: RAMELLA, Mario, I-20121 Milan (IT)
(74) Representative: Carloni, Franco
(86) International application number: IT9900316
(87) International publication number: WO00021737

(56) References cited:
- EP-A- 0 733 464
- WO-A-93/13927

## Description

### Technical Field

The present invention relates to atomising devices for use with containers holding liquid products to be sprayed, e.g. cosmetics, insecticides, paints, etc. In particular, the invention relates to an improved mold permitting the molding and assembling operations of the elements forming the atomising devices to be carried out with a sole apparatus in order to form a single operating device. Further, a production method that makes use of the mold of the invention will also be described. The mold and the production method, which are the subject matter of the present invention, permit the production of atomising devices to be optimised.

### Background Art

There is known that at present the containers used for holding liquids to be sprayed are mainly of two kinds, i.e. containers holding a liquid compound under the pressure exerted by a gaseous propellant and containers which make use of a small delivery pump for delivering the liquid product contained therein. All these containers are provided with an atomising device that is used for breaking up and shooting out the liquid compound in the form of a mist of fine liquid particles. Such devices are generally provided with a delivery button which, when pushed by the User, causes a valve embodied in the container or in the delivery pump to open, thereby causing the delivery of the liquid compound through a conduit formed in the delivery button. A nozzle is inserted at the outlet of the conduit from which the liquid compound is shot out in the form of a jet of fine particles.

The atomising devices are usually made of a thermoplastic material and are formed by injection molding. At present, there are known in the art two main methods for producing such devices.

The first method consists in separately molding the delivery button and the atomising nozzle on two molding machines and then inserting the atomising nozzle into the outlet of the conduit through the delivery button by means of a special automatic assembling machine.

This first production method has the main disadvantages of requiring the use of two separate molds and molding machines and the storage of the delivery button and the atomising nozzle before their assembly, thus creating technical, economical and organisation problems, especially when the production volumes are high.

A further disadvantage is due to the fact that the above mentioned method requires the use of expensive automatic assembling machines for applying the atomising nozzle.

The second method, which is known in the art from the Italian Patent N. 1.184.744, obviates the disadvantages of the first method and consists in molding the atomising nozzle integrally, through an appendix, with the delivery button by means of a special mold and in removing the molded piece from the mold in such a manner that the appendix with the atomising nozzle is at first compelled to rotate about its point of joining to the delivery button until the atomising nozzle is positioned in front of the outlet of the conduit made through the delivery button and then the atomising nozzle is put into position by means of a portion of the mold when the molded and assembled atomising device is forced out from the mold.

This second method has the great advantage of combining in a single machine the molding and assembling operations of the structural elements of the atomising devices. Furthermore, the appropriate atomising nozzle is associated to each delivery button and therefore a qualitative improvement deriving from the greater dimensional accuracy of the two parts to be joined is obtained and sorting and other adjustment operations of the atomising nozzle are no longer required.

Another method of simultaneously forming by injection molding a delivery botton and a atomising nozzle is disdosed in WO 93/13927. This document relates to a molding mechanism and a method of using the mechanism for simultaneously forming, by injection molding, an actuator overcap and a nozzle insert and then, while these two molded parts are still within the molding mechanism, repositioning them and fitting them together.

However, atomising devices having an atomising nozzle of a different colour or material from that of the delivery push button cannot be made with the previous methods. This disadvantage, apparently negligible, is instead serious for the following reasons. A technical reason, which pertains to their use, is due to the fact that with atomising devices having an atomising nozzle of the same colour as the delivery button the users often cannot immediately locate the orientation of the atomising nozzle in order to correctly direct the spray, and a commercial reason is due to the fact that the producers of liquid compounds to be sprayed cannot aesthetically identify their products in order to distinguish them from those of the competitors. In some cases, really, the producers use a different colour for the atomising nozzle in order to distinguish different formulations of a same product, e.g. hair sprays, deodorants, etc.

### Disclosure of Invention

The object of the present invention is to provide a mold of novel design and, moreover, a production method which uses the mold for forming atomising devices that have a atomising nozzle of the same or different colour from that of the delivery button but using a single machine for carrying out the molding and assembling operations.

According to the invention, the mold for molding the delivery button and the atomising nozzle of an atomising device intended to be applied to containers pressurised by a propellant or provided with a delivery pump and containing a liquid compound to be sprayed and for assembling the atomising nozzle into the delivery button is characterised in that it comprises:
a first fixed mold portion comprising the injectors of the molding material,
- a second mold portion movable with respect to said first mold portion for molding the delivery button,
- a third mold portion movable with respect to said first and second mold portions for molding the atomising nozzle,
- a nozzle insertion member movably connected to said third mold portion,
- said three mold portions exactly mating to each other and forming, when the mold is in the closed condition, two molding cavities for the delivery button and the atomising nozzle, respectively, and said nozzle insertion member being provided for inserting the atomising nozzle in an appropriate housing provided in the delivery button once the molding operation is terminated.

According to a feature of the present invention the nozzle insertion member is a rod-shaped element and its free end co-operates with said second and third mold portions in order to form the mold cavity for molding the atomising nozzle.

According to the invention, the method for producing the atomising device comprising a delivery button and an atomising nozzle molded by means of the mold of the invention comprises the steps of:
- opening the molding cavity for the atomising nozzle by retracting the third mold portion together with the nozzle insertion member carrying the atomising nozzle,
- opening the molding cavity for the delivery button by lowering together the second and third mold portions,
- raising the third mold portion together with the nozzle insertion member in order to bring into alignment relationship the atomising nozzle and its housing provided in the delivery button,
- inserting and fixing the atomising nozzle in its housing in the delivery button by moving forward the nozzle insertion member,
- retracting the nozzle insertion member,
- positioning the third mold portion together with the nozzle insertion member in the starting position,
- forcing out from the mold the assembled atomising device, and
- closing the mold for carrying out a following molding operation.

### Brief Description of Drawings

The invention will be now described more in detail with reference to a preferred embodiment given here only for explanatory purposes and without limitation to its extent and illustrated in the accompanying drawings, wherein:
Fig. 1 is a cross sectional view of a conventional delivery button;
Fig. 2 is a cross sectional view of a conventional atomising nozzle to be applied to the delivery button of Fig. 1;
Fig. 3 is a cross sectional view similar to Figs. 1 and 2 showing together the delivery button and the atomising nozzle before the latter is assembled in its operative position in the delivery button in order to form a single assembly forming the atomising device to be applied to a container;
Fig. 4 is a view of the complete mold according to the present invention used for molding the delivery button and the atomising nozzle and for carrying out their assembly;
Fig. 5 is an enlarged detail of the cross sectional view of the mold shown in Fig. 4 illustrating the mold cavities where the delivery button and the atomising nozzle are molded during the molding operation; and
Figs 6 to 17 show the different steps of the operation for assembling the atomising nozzle into the delivery button according to the method of the present invention using the mold of Fig. 4.

### Best Mode for Carrying Out the Invention

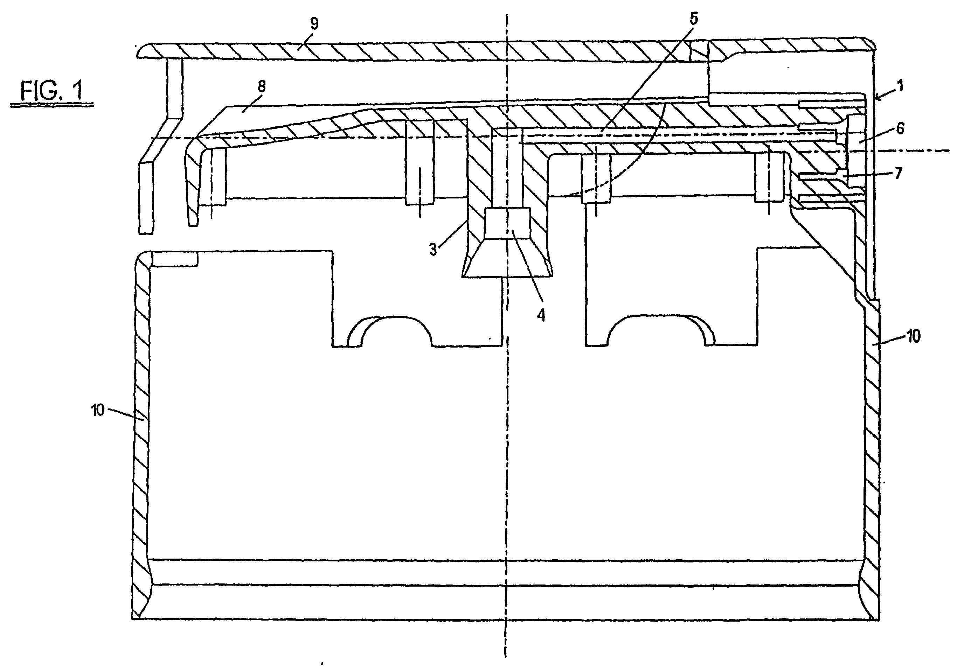

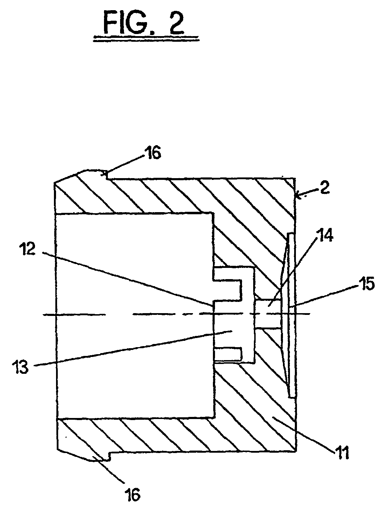

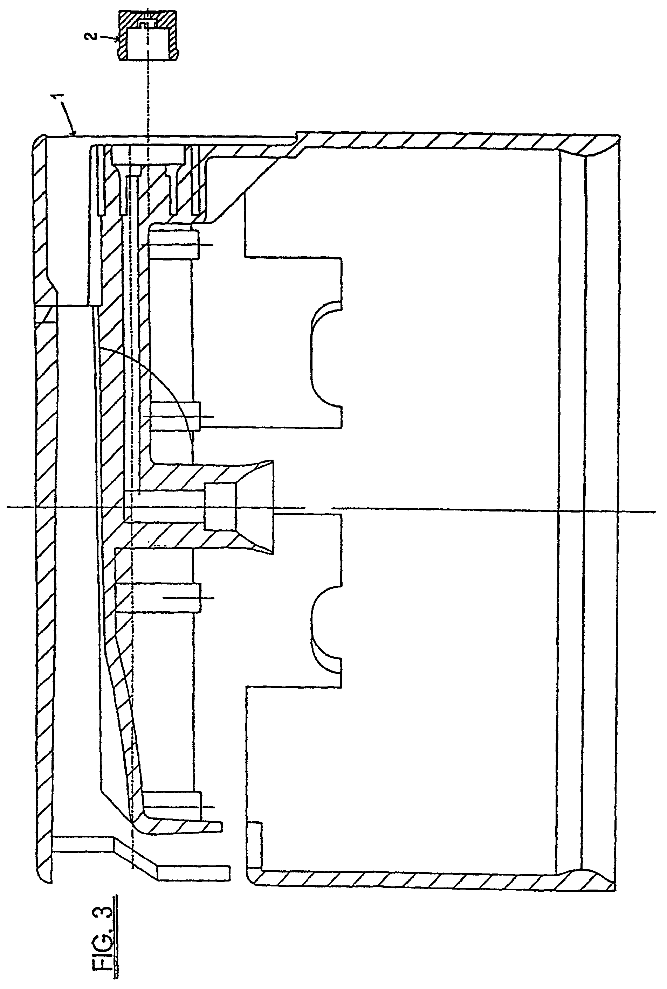

Referring to Figs. 1 to 3, there is shown a delivery button 1 and an atomising nozzle 2 of an atomising device to be applied to a container (not illustrated) and to deliver a liquid compound contained therein under the pressure exerted by a gaseous propellant in the form of an atomised jet.

The delivery button 1 comprises in a known manner a central body 3 provided with a vertical conduit 4 and an horizontal conduit 5 which communicates with the vertical conduit 4 at one end and flows out into open air at the opposite end. The vertical conduit 4 is adapted to be positioned on the projecting stem of a delivery valve (not illustrated) embodied in the container so that, upon opening the valve, the liquid compound together with the gaseous propellant contained therein can flow through the vertical conduit 4 and the horizontal conduit 5 to the outlet 6. The outlet 6 is contoured so as to provide a housing 7 which receives the atomising nozzle 2. Further, the delivery button 1 is provided with a concave portion 8 onto which the user exerts a pressure with a finger to cause the opening of the delivery valve. There can be seen that the delivery button is provided at the top with a portion 9 acting as a seal and is laterally defined by a wall 10 forming the cap applied to the container.

The atomising nozzle 2 comprises in a manner known per se a generally cylindrical body 11 through which an orifice 12 passes which is provided with an inlet 13 for the entry of the liquid compound and the gaseous propellant along a tangential direction, a constriction 14 the purpose of which is to divide the liquid into fine particles and an outlet with diverging walls 15 from which the fine liquid particles are dispersed into air together with the propellant in the form of an atomised jet. The atomising nozzle 2 further comprises attachment means 16 circumferentially arranged and projecting from the external surface of the body 11 for fastening it into the housing 7 in the delivery button 1.

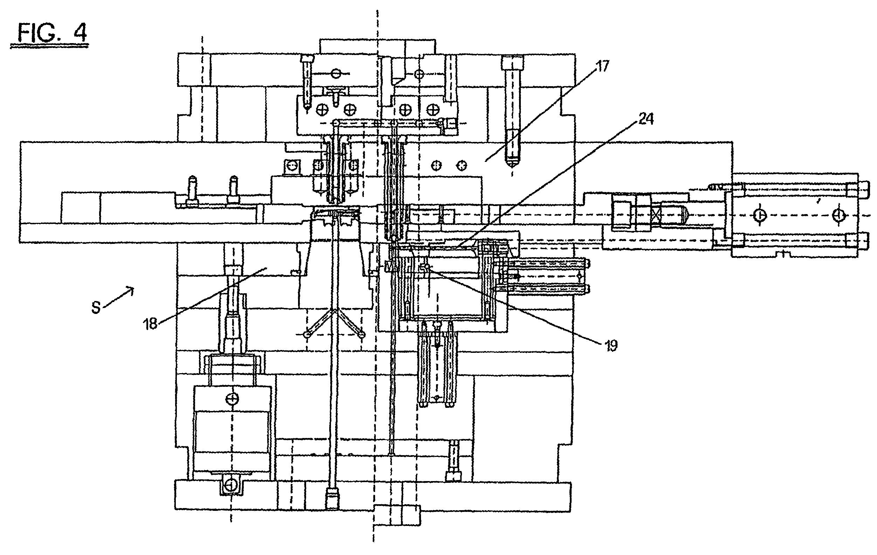

Fig. 4 of the drawings illustrates the mold according to the present invention, generally designated by S. The mold S comprises three portions, namely: a first upper and fixed mold portion 17, a second mold portion 18 movable with respect to the first mold portion 17 and located thereunder, and a third mold portion 19 movable with respect to the first and a second mold portions 17,18 and located under the first mold portion and a second mold portions 17,18 and located under the first mold portion 17 and on a side of the second mold portion 18. Of course, each movement axis of the second and third movable portions 18,19 of the mold requires a control device for controlling the movement along the axis.

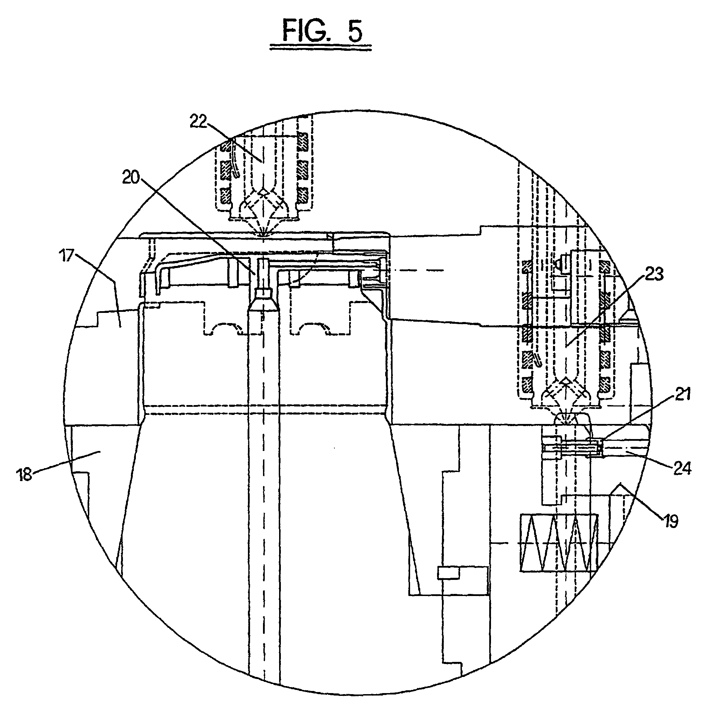

The mold S is configured so as to permit the delivery button 1 and the atomising nozzle 2 to be molded at the same time. In fact, the three mold portions 17,18,19, once the mold S is in the closed configuration, together form two mold cavities 20 and 21 for molding the delivery button 1 and the atomising nozzle 2. These mold cavities 20,21 can be clearly seen in Fig. 5 of the drawings which shows an enlarged detail of the mold portion of concern.

The thermoplastic molding material, properly plasticised and homogenised in an injection molding machine and possibly of different colours, are forced into the mold cavities 20,21 by means of the injectors 22 and 23, respectively, located in the mold portion 17.

A rod-shaped nozzle insertion member 24 controlled by an appropriate control device is movably connected to the mold portion 19. The nozzle insertion member 24 slides horizontally guided by the mold portion 19 and its function is to insert the atomising nozzle 2 into its housing 7 in the delivery button 1. Further, the free end of the insertion member 24 co-operates with the mold portions 18 and 19 to form the mold cavity 21 in which the atomising nozzle 2 is molded.

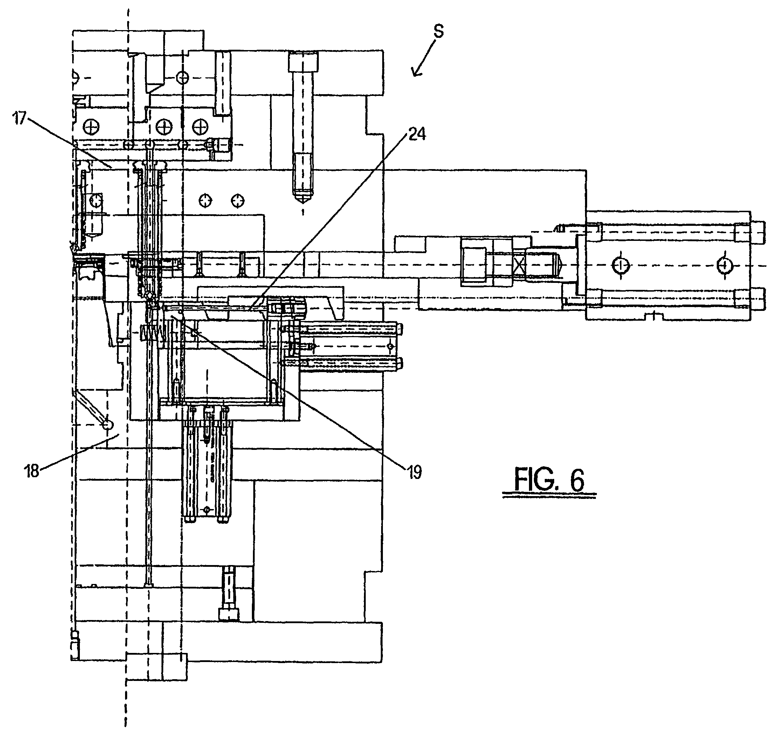

With reference to Figs. 6 to 17 in the following there will be described the method of the invention according to which once the molding operations of the delivery button 1 and the atomising nozzle 2 with the mold S are terminated, their assembly is obtained directly and automatically by means of the movable portions 19,24 of the mold without requiring a specific separate automatic assembly machine.

The assembly operation comprises the following seven steps.

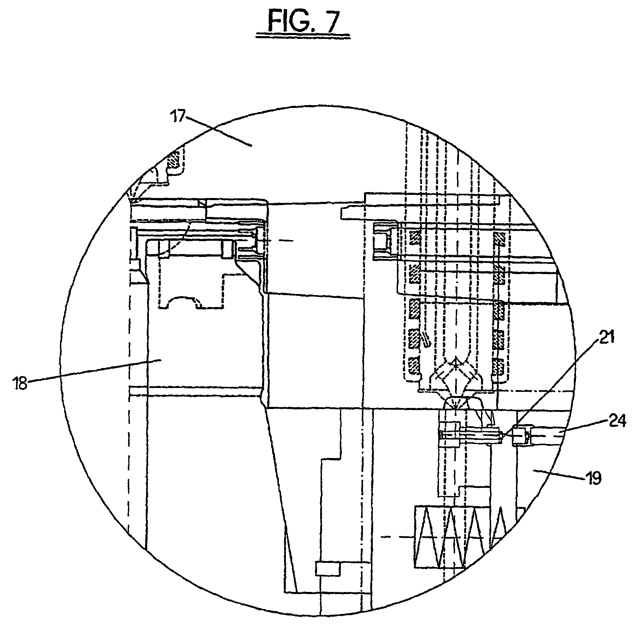

In a first step shown in Figs. 6 and 7 of the drawings, the withdrawing movement the mold portion 19 together with the insertion member 24 opens the mold cavity 21.

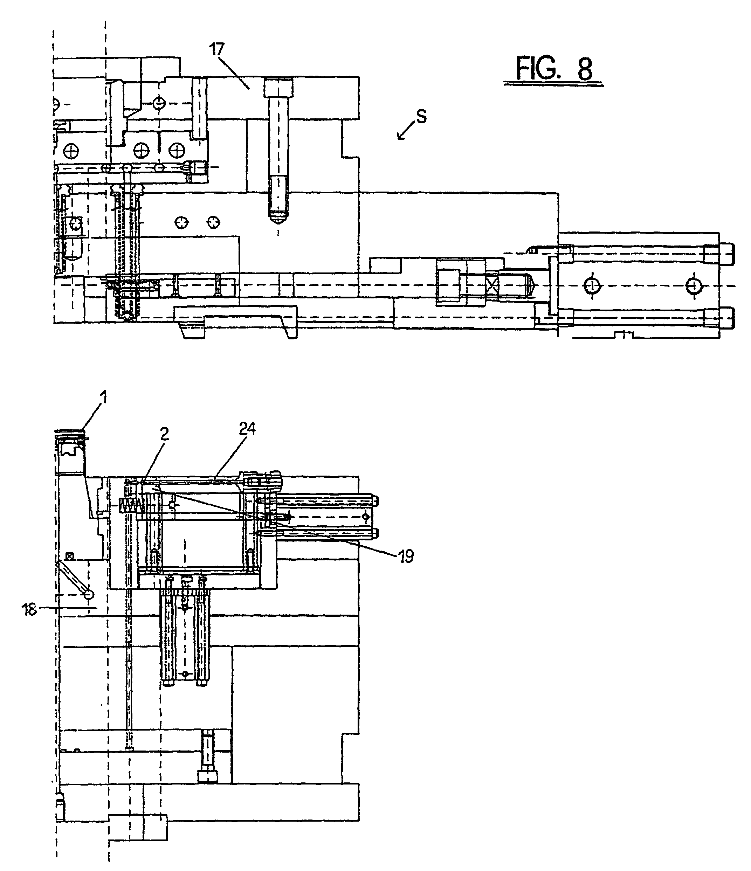

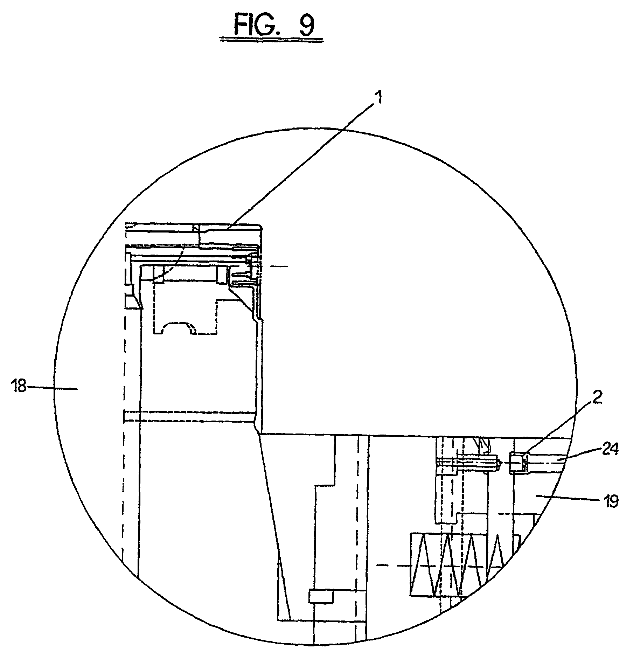

In a second step shown in Figs. 8 and 9 of the drawings, the lowering movement of the mold portions 18 and 19 together opens the mold cavity 20.

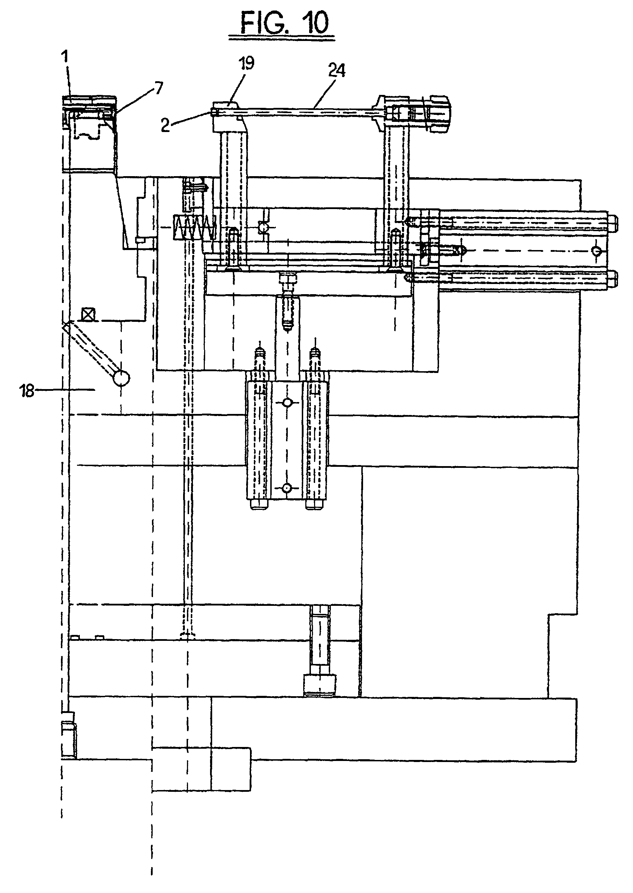

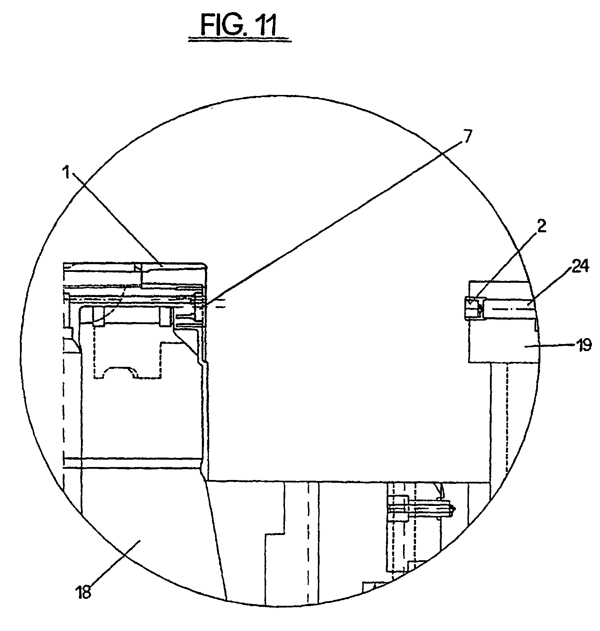

In third step shown in Figs. 10 and 11 of the drawings, the mold portion 19 is raised together with the nozzle insertion member 24 provided with the atomising nozzle 2 in order to bring it into alignment relationship with the housing 7 in the delivery button 1.

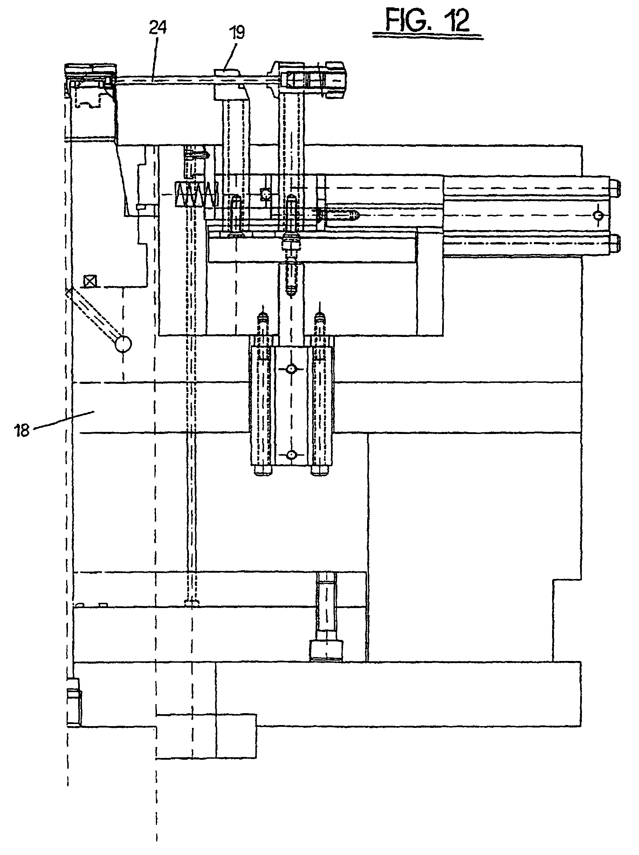

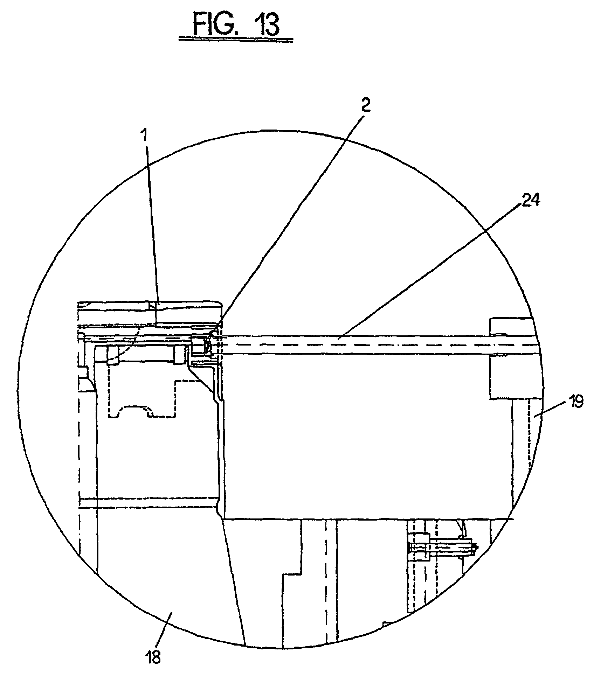

In a fourth step shown in Figs. 12 and 13 of the drawings, the forward movement of the nozzle insertion member 24 inserts and fixes the atomising nozzle 2 into its housing 7.

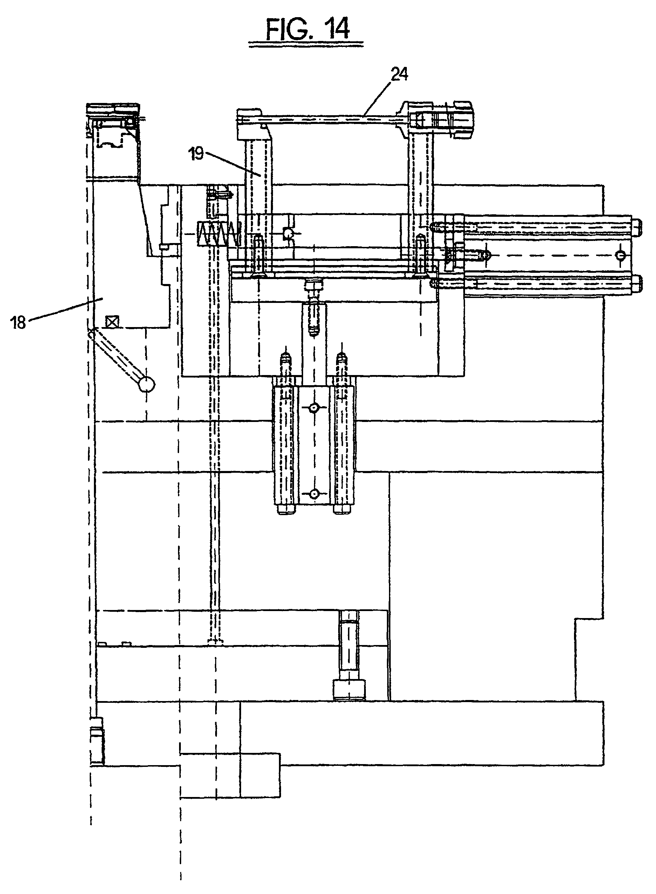

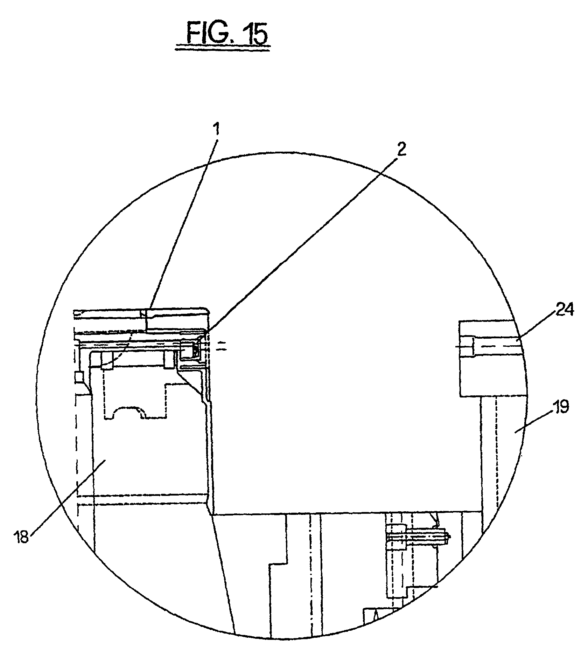

In a fifth step shown in Figs. 14 and 15 of the drawings, the insertion member 24 is withdrawn.

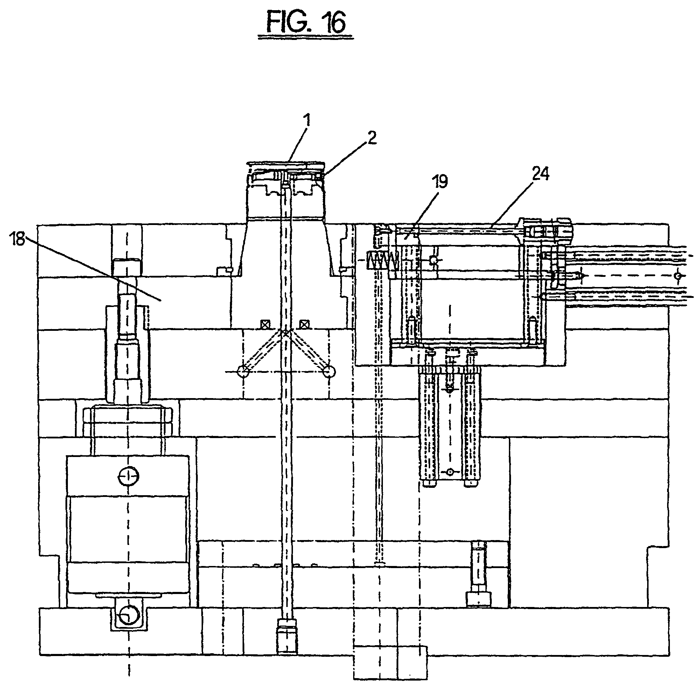

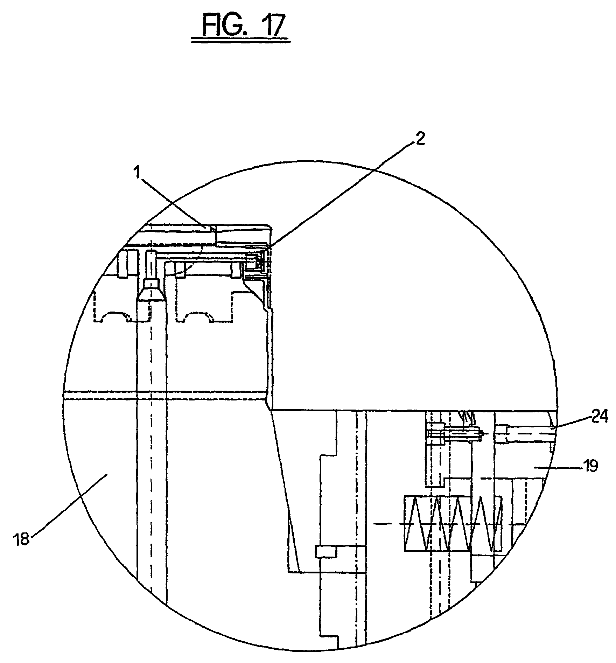

In a sixth step shown in Figs. 16 and 17 of the drawings, the mold portion 19 is positioned again in the configuration of the first step and the finished atomising device is forced out of the mold S.

In the seventh and last step, the mold S is closed for permitting a following molding operation to be carried out.

From the foregoing, the great advantages of the mold and the method according to the present invention can be understood.

Firstly, the production method of the atomising devices is simplified because there are no intermediate products, i.e. the delivery button and the atomising nozzle, to be stored until the assembly operation is carried out.

Secondly, the use of a specific and, moreover, expensive automatic machine for carrying out the assembling operation of the atomising nozzle and the delivery button is no longer required because the operation is carried out directly and automatically by means of the movable portions of the mold.

Thirdly, the appropriate atomising nozzle is necessarily associated to each delivery button and thus a qualitative improvement deriving from the greater dimensional accuracy of the two associated elements is obtained.

At last, what is most important from the commercial point of view, it is possible to obtain an atomising device which has an atomising nozzle of the same or different colour as the delivery button thus giving the possibility of a free choice of the colours.

Although the invention has been described and illustrated with reference to preferred embodiment, a person skilled in the art can clearly make thereto many variations and modifications without departing from the inventive scope as described in the accompanying claims.

## Claims

1. A mold (S) for molding the delivery button (1) and the atomising nozzle (2) of an atomising device intended to be applied to containers pressurised by a propellant or provided with a delivery pump and containing a liquid compound to be sprayed and for assembling the atomising nozzle into the delivery button, **characterised in that** it comprises:
- a first fixed mold portion (17) comprising the injectors (22,23) of the molding material,
- a second mold portion (18) movable with respect to said first mold portion (17) for molding the delivery button (1),
- a third mold portion (19) movable with respect to said first and second mold portions (17,18) for molding the atomising nozzle (2),
- a nozzle insertion member (24) movably connected to said third mold portion (19),
- said three mold portions (17,18,19) exactly mating to each other and forming, when the mold (S) is in the closed condition, two molding cavities (20,21) for the delivery button (1) and the atomising nozzle (2), respectively, and said nozzle insertion member (24) being provided for inserting the atomising nozzle (2) in an appropriate housing (7) provided in the delivery button (1) once the molding operation is terminated.

2. A mold according to a claim 1, **characterised in that** the nozzle insertion member (24) is a rod-shaped element and its free end co-operates with said second and third mold portions (18,19) in order to form the mold cavity (21) for molding the atomising nozzle (2).

3. A method for producing the atomising device comprising a delivery button (1) and an atomising nozzle (2) molded by means of the mold (S) of the invention, **characterised in that** it comprises the steps of:
- opening the molding cavity (21) for the atomising nozzle (2) by retracting the third mold portion (19) together with the nozzle insertion member (24) carrying the atomising nozzle (2),
- opening the molding cavity (20) for the delivery button (1) by lowering together the second and third mold portions (18,19),
- raising the third mold portion (19) together with the nozzle insertion member (24) in order to bring into alignment relationship the atomising nozzle (2) and its housing (7) provided in the delivery button (1),
- inserting and fixing the atomising nozzle (2) in its housing (7) in the delivery button (1) by moving forward the nozzle insertion member (24),
- retracting the nozzle insertion member (24),
- positioning the third mold portion (19) together with the nozzle insertion member (24) in the starting position,
- forcing out from the mold (S) the assembled atomising device, and
- closing the mold (S) for carrying out a following molding operation.

## Patentansprüche

1. Form (S) zum Formen des Abgabedrückers (1) und der Zerstäuberdüse (2) einer Zerstäubervorrichtung zum Anbringen an einen unter Treibmitteldruck stehenden oder mit einer Abgabepumpe versehenen Behälter, der eine zu zerstäubende flüssige Verbindung enthält, und zum Montieren der Zerstäuberdüse auf den Abgabedrücker, **dadurch gekennzeichnet, dass** sie aus :
- einem ersten feststehenden Formteil (17), der die Spritzdüsen (22,23) für die Formmasse aufweist,
- einem zum ersten Formteil (17) beweglichen zweiten Formteil (18) zum Formen des Abgabedrückers (1),
- einen zum ersten und zweiten Formteil (17,18) beweglichen dritten Formteil (19) zum Formen der Zerstäuberdüse (2),
- einem Düseneinsetzelement (24), das mit dem dritten Formteil (19) beweglich verbunden ist,
- wobei die drei Formteile (17,18,19) genau aufeinander passen und, wenn die Form (S) sich im geschlossenen Zustand befindet, zwei Formräume (20,21) für den Abgabedrücker (1) beziehungsweise für die Zerstäuberdüse (2) bilden, und das Düseneinsetzelement (24) dazu vorgesehen ist, um die Zerstäuberdüse (2) in eine im Abgabedrücker (1) vorgesehene geeignete Aufnahme (7) einzusetzen, wenn der Spritzgußvorgang abgeschlossen ist, besteht.

2. Form nach Anspruch 1, **dadurch gekennzeichnet, dass** das Düseneinsetzelement (24) ein stangenförmiges Element ist und dessen freies Ende . mit dem zweiten und dritten Formteil (18,19) zum Bilden des Formraums (21) für den Spritzgußvorgang der Zerstäuberdüse (2) zusammenarbeitet.

3. Verfahren zum Herstellen der Zerstäubervorrichtung bestehend aus einem Abgabedrücker (1) und einer Zerstäuberdüse (2), die mittels der erfindungsgemäßen Form (S) geformt werden, **gekennzeichnet durch** die folgenden Phasen, die darin bestehen, dass:
- der Formraum (21) für die Zerstäuberdüse (2) **durch** Zurückziehen des dritten Formteils (19) zusammen mit dem die Zerstäuberdüse (2) tragenden Düseneinsetzelement (24) geöffnet wird,
- der Formraum (20) für den Abgabedrücker (1) **durch** Herablassen des zweiten und dritten Formteils (18, 19) geöffnet wird,
- der dritte Formteil (19) mit dem Düseneinsetzelement (24), um die Zerstäuberdüse (2) und ihre im Abgabedrücker (1) vorgesehene Aufnahme (7) in eine ausrichtende Beziehung zu bringen, angehoben wird,
- die Zerstäuberdüse (2) in ihre Aufnahme (7) im Abgabedrücker (1) **durch** Vorwärtsbewegen des Düseneinsetzelements (24) eingesetzt und darin befestigt wird,
- das Düseneinsetzelement (24) zurückgezogen wird,
- der dritte Formteil (19) mit dem Düseneinsetzelement (24) in die Ausgangsstellung positioniert wird,
- die zusammengesetzte Zerstäubervorrichtung aus der Form (S) herausgedrückt wird, und
- die Form (S) zur Durchführung des nächsten Spritzgußvorganges geschlossen wird.

## Revendications

1. Moule (S) pour mouler le bouton de décharge (1) et la buse de pulvérisation (2) d'un dispositif de pulvérisation destiné à être appliqué à des récipients pressurisés par un gaz propulseur ou prévus avec une pompe de décharge et contenant un composé liquide à pulvériser et pour assembler la buse de pulvérisation dans le bouton de décharge, **caractérisé en ce qu'**il comprend:
- une première partie de moule fixe (17) comprenant les injecteurs (22, 23) de la matière à mouler,
- une deuxième partie de moule (18) mobile par rapport à ladite première partie de moule (17) pour mouler le bouton de décharge (1),
- une troisième partie de moule (19) mobile par rapport auxdites première et deuxième parties de moule (17, 18) pour mouler la buse de pulvérisation (2),
- un élément d'insertion de buse (24) connecté de façon mobile à ladite troisième partie de moule (19),
- lesdites trois parties de moule (17, 18, 19) qui sont exactement adaptées les unes aux autres et forment, quand le moule (S) est à l'état fermé, deux cavités de moulage (20, 21) pour le bouton de décharge (1) et la buse de pulvérisation (2), respectivement, et ledit élément d'insertion de buse (24) étant prévu pour insérer la buse de pulvérisation (2) dans un logement approprié (7) prévu dans le bouton de décharge (1) dès que l'opération de moulage est terminée.

2. Moule selon la revendication 1, **caractérisé en ce que** l'élément d'insertion de buse (24) est un élément en forme de tige, et son extrémité libre coopère avec lesdites deuxième et troisième parties de moule (18, 19) afin de former la cavité de moule (21) pour mouler la buse de pulvérisation (2).

3. Procédé de mise en oeuvre du dispositif de pulvérisation comprenant un bouton de décharge (1) et une buse de pulvérisation (2) moulés au moyen du moule (S) de l'invention, **caractérisé en ce qu'**il comprend les étapes consistant à :
- ouvrir la cavité de moulage (21) pour la buse de pulvérisation (2) en rétractant la troisième partie de moule (19) avec l'élément d'insertion de buse (24) portant la buse de pulvérisation (2),
- ouvrir la cavité de moulage (20) pour le bouton de décharge (1) en abaissant ensemble les deuxième et troisième parties de moule (18, 19),
- remonter la troisième partie de moule (19) avec l'élément d'insertion de buse (24) afin d'amener en relation d'alignement la buse de pulvérisation (2) et son logement (7) prévu dans le bouton de décharge (1),
- insérer et fixer la buse de pulvérisation (2) dans son logement (7) dans le bouton de décharge (1) en avançant l'élément d'insertion de buse (24),
- rétracter l'élément d'insertion de buse (24),
- positionner la troisième partie de moule (19) avec l'élément d'insertion de buse (24) dans la position de départ,
- expulser du moule (S) le dispositif de pulvérisation assemblé, et
- fermer le moule (S) pour exécuter une opération de moulage suivante.
